# EUROPÄISCHE PATENTSCHRIFT

(11) **EP 2 409 381 B1**
(45) Veröffentlichungstag und Bekanntmachung des Hinweises auf die Patenterteilung: **06.08.2014**
(21) Anmeldenummer: 10702882.1
(22) Anmeldetag: 09.02.2010
(51) Int. Cl.: H02K 1/24, H02K 19/10

(54) **ELEKTRISCHE MASCHINE**
ELECTRIC MACHINE
MACHINE ÉLECTRIQUE

(30) Priorität: 20.03.2009 DE 102009001715
(43) Veröffentlichungstag der Anmeldung: 25.01.2012
(73) Patentinhaber: Robert Bosch GmbH, 70442 Stuttgart (DE)
(72) Erfinder: BABAJANYAN, Artem, 76532 Baden-Baden (DE); WILDE, Alexandra, 71272 Renningen (DE); REUTLINGER, Kurt, 70174 Stuttgart (DE)
(86) Internationale Anmeldenummer: PCT/EP2010/051558
(87) Internationale Veröffentlichungsnummer: WO 2010/105875

(56) Entgegenhaltungen:
- WO-A1-03/094326
- WO-A1-2008/135628
- DE-A1-102007 028 347
- GB-A- 1 218 153
- JP-A- 3 139 149
- SU-A1- 764 043
- US-B1- 6 222 286

## Beschreibung

Die Erfindung betrifft eine elektrische Maschine, enthaltend einen Stator, einen Rotor, der einstückig aufgebaut und drehbar um eine Rotorachse gelagert ist, mindestens eine Spule, die im Wesentlichen ein um die Rotorachse rotierendes radiales Magnetfeld erzeugt, und einen Magneten.

### Stand der Technik

Die GB 1 2183 153 zeigt einen Rotor einer elektrischen Maschine, der über den Umfang mehrere Polschuhe aufweist. Am äußeren Umfang der Polschuhe sind Polspitzen eingefügt, die aus einzelnen axial gestapelten Lamellen aus magnetisch gut leitendem Material ausgebildet sind.

In der WO 03/094326 ist ein Elektromotor offenbart, bei dem der Rotor mitsamt der Rotorwelle einstückig aus einem ferromagnetischen Material ausgebildet ist. Am äußeren Umfang weist der Rotor Reduktanzpole auf, an denen in Umfangsrichtung verlaufenden Nuten ausgebildet sind.

Mit der WO 2008/135628 ist eine Axialfluss-Maschine bekannt geworden, bei der viele einzelne Ferromagnete auf einer Rotorscheibe angeordnet sind. An einer axialen Stirnseite der Rotorscheibe ist eine Oberflächenplatte über den Ferromagneten angeordnet, die einen deutlich höheren Widerstand aufweist als die Ferromagnete.

Aus der DE 10 2007 028 347 A1 ist eine Homopolar- oder Gleichpolmaschine bekannt. Derartige elektrische Maschinen können schneller drehen als elektrische Maschinen, die z.B. einen Kommutator aufweisen. Sie sind daher insbesondere geeignet, um Maschinen im Leistungsbereich von 10 bis 20 kW anzutreiben, wobei eine erhöhte Drehzahl von z.B. 100.000 Umdrehungen pro Minute erforderlich ist. Insbesondere werden diese elektrischen Maschinen in Antrieben von Verdichtern in Brennstoffzellen oder in Antriebseinheiten von Bearbeitungszentren eingesetzt.

Aufgrund der erhöhten Drehzahlen sind die mechanischen Festigkeitsanforderungen durch die Rotationskräfte gegenüber konventionell aufgebauten elektrischen Maschinen an den Rotor erhöht. Dies wird durch einen massiven einstückigen Rotor gewährleistet. Durch den einstückigen Aufbau des Rotors werden an der Oberfläche des Rotors Wirbelströme induziert, die zur Erwärmung der elektrischen Maschine führen. Üblicherweise werden zur Reduzierung von Wirbelströmen Blechpakete aus Elektroblech verwendet, die zueinander z.B. mittels Backlack elektrisch isoliert sind. Die verfügbaren Blechpakete sind auf Grund der erhöhten Festigkeitsanforderungen in der zugrundeliegenden Homopolarmaschine nicht für den Einsatz in dieser geeignet, um Wirbelströme in einem Rotor zu reduzieren.

### Offenbarung der Erfindung

Es ist daher die Aufgabe der Erfindung, eine elektrische Maschine mit einem einstückigen ausgeführtem Rotor bereitzustellen, bei der die Erwärmung reduziert ist.

Diese Aufgabe wird durch eine elektrische Maschine gemäß Anspruch 1 gelöst. Bevorzugte Ausführungsformen sind in den abhängigen Ansprüchen angegeben.

Erfindungsgemäß wurde erkannt, dass die Erwärmung der elektrischen Maschine auf Grund von Wirbelströme erfolgt, die in einem einstückig aufgebauten Rotor induziert werden, dadurch reduziert werden kann, indem der Rotor über eine oberflächennahe Wirbelstromreduktionseinrichtung verfügt, die zumindest an einer Umfangsfläche des Rotors angeordnet ist. Auf diese Weise können die im Rotor induzierten Wirbelströme gedämpft und die in den Rotor induzierte Wärme reduziert werden. Bei der Erfindung weist die Wirbelstromreduktionseinrichtung radial verlaufende Strukturelemente auf. Auf diese Weise können oberflächennah parallel zur Rotorachse verlaufende Wirbelströme durch die Strukturelemente unterbrochen werden, so dass sich nur in Bereichen zwischen zwei Strukturelementen ein Wirbelstromkreis ausbilden kann. Die dabei ausgebildeten kleineren Wirbelstromkreise führen zu einer geringeren Erwärmung des Rotors als ein nicht durch Strukturelemente unterbrochener Wirbelstromkreis. Bei der Erfindung sind die Strukturelemente als Ausnehmungen zumindest einer Umfangsfläche ausgeführt. Auf diese Weise können die oberflächennah verlaufenden Wirbelströme einfach unterbrochen werden. Bei der Erfindung ist die Wirbelstromreduktionseinrichtung an einer Umfangsfläche des Rotors schichtartig ausgebildet. Auf diese Weise können Wirbelstromkreise unabhängig ihrer Flussrichtung gedämpft werden.

In einer weiteren Ausführungsform der Erfindung sind die Ausnehmungen als Nuten ausgeführt. Dies hat den Vorteil, dass eine Nut im Herstellungsprozess des Rotors einfach, beispielsweise durch Drehen, Sägen, Fräsen oder Lasern in den Rotor einbringbar ist.

Nachfolgend wird die Erfindung anhand von Figuren ohne Beschränkung des allgemeinen Erfindungsgedankens näher erläutert. Dabei zeigt:
Fig. 1 eine Seitenansicht einer erfindungsgemäßen elektrischen Maschine,
Fig. 2 eine Schnittansicht der elektrischen Maschine aus Fig. 1 entlang der Rotorachse,
Fig. 3 eine Draufsicht auf den Rotor der elektrischen Maschine aus Fig. 2,
Fig. 4 eine Schnittansicht des in Fig. 3 gezeigten Rotors, und
Fig. 5 eine schematische 3D-Darstellung des in Fig. 3 gezeigten Rotors.

### Ausführungsformen der Erfindung

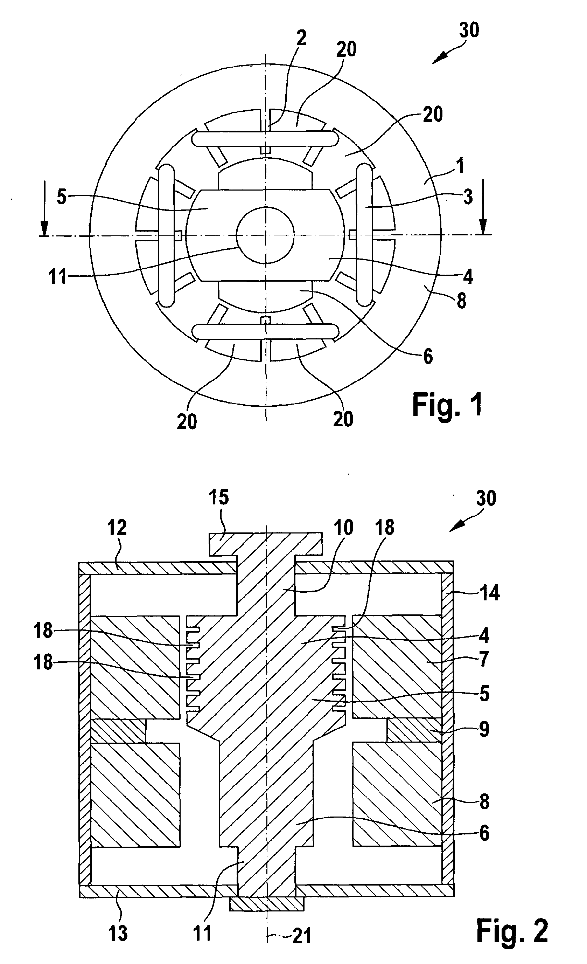

Fig. 1 zeigt eine Seitenansicht einer erfindungsgemäßen elektrischen Maschine 30. Dabei weist der Stator 1 zwei hintereinander angeordnete baugleiche Statorelemente 7,8 auf. Die Statorelemente 7, 8 haben eine zylinderähnliche Form, wobei innenseitig radiale Vorsprünge 2 hervorstehen, die von Nuten 20 voneinander abgetrennt sind. Jeweils eine Spule 3 umfasst drei nebeneinander angeordnete Vorsprünge 2 der beiden Statorelemente 7, 8. Die Spulen 3 erzeugen mit einer Bestromung durch Drei-Phasen-Wechselstrom ein um eine Rotorachse 21 rotierendes magnetisches Drehfeld. Der Rotor 4 ist im Inneren des Stators 1 an seinen Lagerflächen 10, 11 drehbar gelagert und umfasst entlang der Rotorachse 21 einen ersten Abschnitt 5 und einen zweiten Abschnitt 6. Die beiden Abschnitte 5, 6 umfassen zwei gegenüberliegende runde Außenflächen, die jeweils nahe an nach innen hervorstehenden Vorsprüngen 2 der Statorelemente 7, 8 im Betrieb entlang laufen, so dass nur ein enger Spalt zwischen den Vorsprüngen 2 und den gegenüberliegenden Abschnitten 5, 6 ausgebildet ist. Zwischen den zwei gegenüberliegenden runden Außenflächen der Abschnitte 5, 6 sind jeweils zwei gegenüberliegende ebene parallele Außenflächen angeordnet. Die gegenüberliegenden parallelen Außenflächen des zweiten Abschnitts 6 sind relativ zu den gegenüberliegenden Außenflächen des Abschnitts 5 um 90° verdreht. Der Einfachheit wegen sind vier Spulen dargestellt. Üblicherweise sind zwölf Spulen eingesetzt, wobei jede Spule 3 versetzt um drei Vorsprünge 2 gewickelt ist, so dass jeder Vorsprung 2 mit jeweils drei Spulen 3 umgeben ist. Die in der Ausführungsform beschriebene vierpolige Maschine kann auch in jeder beliebigen anderen Kombination von Anzahlen von Polen und/oder Vorsprüngen verwendet werden. Ferner sind unterschiedliche Wicklungsschemen z.B. eine Zwei-Etagen-Schleifenwicklung nach den bekannten Mustern zum Bewickeln der Vorsprünge 2 möglich. In bekannter Weise kann auch ein Ständerpaket mit einer größeren Anzahl von Vorsprüngen 2 aufgebaut werden.

Fig. 2 zeigt eine Schnittansicht der elektrischen Maschine aus Fig. 1 entlang der Rotorachse 21. Die Schnittlinie ist in Fig. 1 dargestellt verläuft entlang der Rotorachse. Zwischen den zwei zylinderähnliche Statorelementen 7, 8 ist ein ringförmiger Magnet 9, der beispielsweise aus mehreren Teilmagneten, wie etwa zwei halbringförmigen Magnetschalen, zusammen gesetzt ist, angeordnet. Der Magnet 9 erzeugt ein Magnetfeld, welches den Rotor 4 in seinem oberen Abschnitt 5 und seinem unteren Abschnitt 6 entgegengesetzt polt. Um den magnetischen Kreis zu schließen, treten die magnetischen Feldlinien im unteren Abschnitt 6 des Rotors 4 in diesen ein, so dass sich im unteren Abschnitt z.B. zwei gegenüberliegende Magnetpole S ausbilden. Die magnetischen Feldlinien verlassen den Rotor 4 im oberen Abschnitt 5 wieder an den Vorsprüngen 2 und treten in den Stator ein, so dass sich im oberen Abschnitt z.B. zweit gegenüberliegende Magnetpole N ausbilden. Dadurch verlaufen die magnetischen Flusslinien im Rotor zumindest teilweise parallel zur Rotorachse und ersetzen dadurch die üblicherweise im Rotor 4 angeordneten Magneten. Durch ein Anlegen einer Wechselspannung an den Spulen 3 bilden diese abwechselnd ein Magnetpole N und S aus welche über die Vorsprünge 2 an den Rotor geleitet werden. Die wechselnden Magnetfelder versetzten den Rotor durch Anziehung und Abstoßungseffekte der gegenüberliegenden Magnetpole in Drehung. Hat sich der Rotor 4 soweit verdreht, dass ein Magnetpol des Rotor 4 ein entgegengesetzten Magnetpol gegenüber einem Vorsprung 2 anliegt, so wird die an den Spulen anliegende Stromrichtung geändert. Dadurch werden die Magnetpole am Rotor 4 weiter abgestoßen und der Rotor dreht weiter.

Aufgrund dieser Wirkungsweise der elektrischen Maschine ist der Rotor 4 einstückig ausbildbar und weist dadurch höhere Festigkeitswerte für eine erhöhte Maximaldrehzahl auf. Dadurch eignet sich die in der Ausführungsform beschriebene elektrische Maschine 30 insbesondere für Antriebe mit hohen Drehzahlen, beispielsweise für elektrisch angetriebene Verdichter in der Luftversorgung von Brennstoffzellen oder in Antriebsystemen von Bearbeitungszentren. Üblicherweise weisen die in der Ausführungsform beschriebene elektrische Maschine 30 eine Betriebsdrehzahl von etwa 100.000 oder mehr Umdrehungen pro Minute auf.

An den Magnet 9 können auch Vorsprünge ausgebildet sein, die zwischen den Vorsprüngen 2 der beiden Statorelemente 7, 8 angeordnet sind. Durch das in den Spulen 3 erzeugte Drehfeld wird der Rotor 4 durch das in ihm statisch induzierte Magnetfeld, verdreht und angetrieben. Die Drehzahl des Rotors 4 ist abhängig von der Frequenz des Drehfelds. Das Drehfeld wird durch die Vorsprünge 20 nur in die runden Umfangsflächen des Rotor 4 in den Rotor 4 eingeleitet. Auf grund des vergrößerten Luftspalts zwischen den parallel angeordneten Außenflächen des Rotors 4 wird in diesen Bereichen nahezu kein magnetisches Drehfeld in den Rotor 4 eingeleitet.

Durch den einstückig ausgebildeten Rotor 4 werden an der Oberfläche Wirbelströme induziert, die als Stromwärmeverluste zur Erwärmung des Rotors führen. Dabei teilen sich die Verluste durch die Wirbelströme in einen Verlustanteil aus der Nutoberwelle und einen Verlustanteil aus der Nutung auf. Der Verlustanteil der Nutoberwellen entsteht unter Bestromung der Spulen 3 im Ständer 1. Die einzelnen Vorsprünge 2 in den Statorelementen 7, 8 sind durch Ausnehmungen, die beispielsweise nutförmig sind, getrennt. Durch das Einlegen der Spulen 3 in die Ausnehmungen 20 entsteht über jeder Ausnehmung ein Sprung in der Felderregerkurve und resultiert in einem treppenförmigen Verlauf der Felderregerkurve. Die einzelnen Sprünge in der Felderregerkurve erzeugen wellenförmige Feldschwankung im magnetischen Feld, deren Umlaufgeschwindigkeit asynchron zur Umlaufgeschwindigkeit des Rotors 4 ist, so dass die Feldschwankungen Wirbelströme an der Oberfläche des Rotors 4 induzieren.

Die Verluste durch Nutungsoberwellen werden durch die Nutung des Ständers 1 verursacht. Dabei fällt über der Nut das magnetische Feld ab, während es sich über den Vorsprüngen 2 konzentriert. Dies führt in der Felderregerkurve zu ständerfesten Induktionsschwankungen über der Nut. Die Nutungsoberwellen sind abhängig von der Nutgeometrie und von der Nutteilung. Die Nutungsoberwellen und die Nutoberwellen überlagern sich mit dem Drehfeld in der Felderregerkurve.

Sowohl die Nutoberwellen als auch die Nutungsoberwellen induzieren Wirbelströme im Rotor 4, die sowohl asynchron zu der Umlaufgeschwindigkeit des Rotors laufen, als auch zumindest teilweise parallel zur Rotorachse 21 verlaufen. Um die induzierten Wirbelströme und daraus resultierend die Stromwärmeverluste an den Oberflächen des Rotors 4 zu reduzieren, weist der Rotor 4 im Bereich der rund verlaufenden Außenflächen als Wirbelstromreduktionseinrichtung Ausnehmungen 18 auf. Die Ausnehmungen 18 sind als Strukturelemente in regelmäßigem Abstand zueinander an der Oberfläche angeordnet, um die überwiegend parallel zur Rotorachse verlaufenden oberflächennahen Wirbelströme zu unterbrechen. Die Ausnehmungen 18 sind als Nut in die Oberfläche des Rotors 4 ausgebildet. Sie können mittels Drehen, Sägen, Rollen oder Fräsen in die Oberfläche des Rotors eingebracht werden, wobei auch verschiedene Formen für die Ausnehmungen 18 denkbar sind. Die Ausnehmungen 18 verlaufen dabei radial entlang der Oberfläche des Rotors und liegen somit parallel zur Kraftrichtung und unterbrechen diese nicht. Üblicherweise werden zur Unterbrechung von Wirbelströmen Rotoren mittels Blechpaketen versehen, wobei die einzelnen Bleche des Blechpakets elektrisch voneinander isoliert sind. Aufgrund der erhöhten Drehzahl der in der Ausführungsform gezeigten Homopolarmaschine können diese Blechpakete aus Festigkeitsgründen nicht am Rotor 4 eingesetzt werden. Die Ausnehmungen 18 sind in der Ausführungsform mit einer geringen Breite versehen, da der Luftspalt in der Ausnehmung 18 die Krafteinwirkung auf den Rotor 4 reduziert. Der Luftspalt in den Ausnehmung 18 isoliert die einzelnen zwischen den Ausnehmungen liegende Segmente im oberflächennahen Bereich zueinander. Die oberflächennah verlaufenden Wirbelströme versuchen die einzelnen Ausnehmungen nicht zu umfließen und bilden in den einzelnen Segmenten kleinere Wirbelstromkreise aus. Dabei ist die Summe der durch die unterbrochenen Wirbelströme eingebrachte Energie in den Rotor geringer als bei nichtunterbrochenen Wirbelströmen.

Den Abstand der einzelnen Ausnehmungen 18 zueinander, die regelmäßige bzw. unregelmäßige Anordnung der Ausnehmungen 18 sowie deren Tiefe, Breite und den Querschnitt der Ausnehmungen wahlt der Fachmann entsprechend des Einsatzzwecks des Rotors 4.

Der Rotor 4 weist im Bereich seiner Enden Lagerflächen 10, 11 auf, welche zur Lagerung des Rotors 4 in einem oberen bzw. unteren Gehäusedeckel 12, 13 geeignet sind. Das Gehäuse 14 weist diamagnetische oder paramagnetische Eigenschaften auf, um einen magnetischen Kurzschluss über das Gehäuse 14 zu vermeiden. Der Rotor 4 weist an einer Seite der oberen Lagerfläche 10 einen kreisförmigen Flansch 15 auf, über welchen die erzeugte Leistung der elektrischen Maschine 30 abgreifbar ist. Beispielsweise kann an dem Flansch 15 ein Verdichter einer Brennstoffzelle angeschlossen sein.

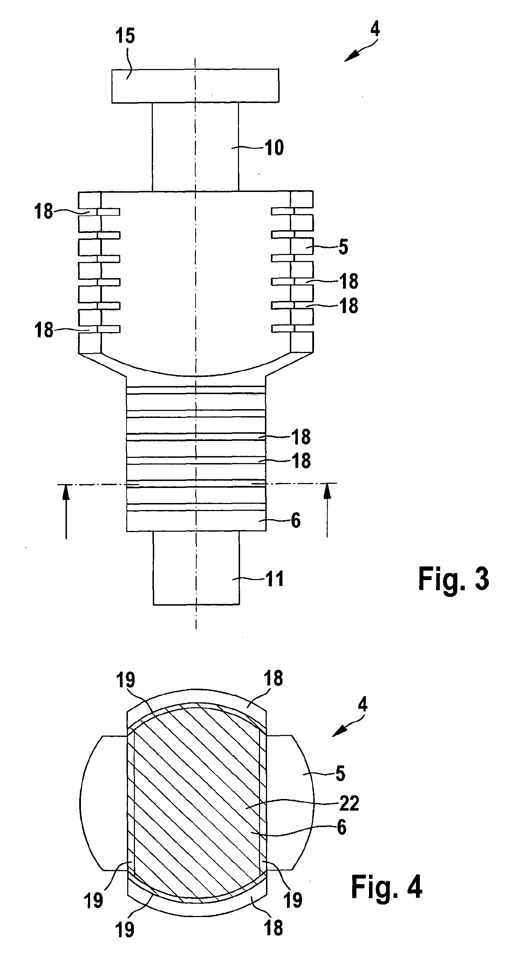

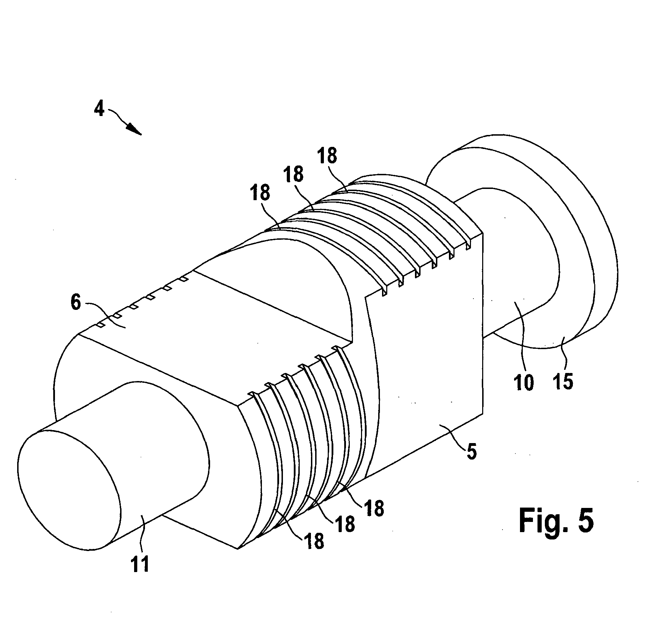

Fig. 3 bis Fig. 5 zeigen verschiedene Ansichten des in Fig. 2 gezeigten Rotors. Dabei zeigt Fig. 3 eine Draufsicht, Fig. 4 eine Schnittansicht entlang der in Fig. 3 gezeigten Schnittlinie und Fig. 5 eine schematische 3D-Darstellung des in Fig. 3 gezeigten Rotors. Der dargestellte Rotor 4 entspricht in seiner Ausführungsform dem in Fig. 2 gezeigten Rotor 4. Der Rotor weist an seinen runden Umfangsflächen die in Fig. 1 bzw. Fig. 2 gezeigten Ausnehmungen 18 als Strukturelemente der Wirbelstromreduktionseinrichtung auf, mit welchen der parallel zur Rotorachse 21 verlaufende Wirbelstrom unterbrochen wird. Des Weiteren weist der Rotor 4 in der Fig. 4 eine Schicht 19 als weitere Wirbelstromreduktionseinrichtung auf, welche durch eine Wärmebehandlung des Rotors 4 in dem Rotor 4 erzeugt wird. Die Schicht 19 ist in den weiteren Figuren des Rotor 4 nicht erkennbar, da die Schicht 19 den Rotor 4 umgibt. **Erfindungsgemäß werden die Ausnehmungen 18 als Strukturelement mit der Schicht 19 kombiniert um die Wirkung der Wirbelstromreduktionseinrichtung zu erhöhen.**

Üblicherweise werden die Rotoren für die in Fig. 2 beschriebene Ausführungsform als Rotorwerkstoff der Qualitätsstahl C60 eingesetzt. Vorteilhafterweise weist diese Stahlsorte sowohl gute Festigkeitswerte als auch gute weichmagnetische Eigenschaften auf. Auf Grund des spezifischen elektrischen Widerstands von etwa 0,17 bis 0,23 µΩm werden im Rotor 4 verlaufende Wirbelströme nur gering gedämpft. In der erfindungsgemaßen Ausführungsform des Rotors 4, weist der Rotor 4 als Rotorwerkstoff einen Einsatzstahl z.B. 16MnCr5 auf, welcher insbesondere für eine Wärmebehandlung geeignet ist. Die Schicht 19 wird durch eine Wärmebehandlung im Rotor 4 erzeugt. Dabei wird der Rotor in einer kohlenwasserstoffhaltige Atmosphäre auf eine Temperatur von ca. 880°C bis 980°C erwärmt, wobei in einem Zeitraum von etwa 3, 5 Stunden der in der Atmosphäre vorhandene Kohlenstoff in den Randbereich von ca. 0,9 bis 2,0 mm des Rotors 4 eindiffundiert. Dabei wird der Kohlenstoffgehalt des Rotorwerkstoffs 16MnCr5 von üblicherweise 0,16 % auf etwa 0,8 bis 1,1 % in der Schicht 19 angehoben, wobei der Kohlenstoffgehalt im Randbereich des Rotors 4 bis 0,5 mm Tiefe idealerweise konstant ist. Um den in dieser Phase austenitisch vorliegenden Rotor 4 mit einer martensitischen Schicht 19 zu versehen wird der Rotor 4 mittels Öl abgeschreckt. In einem anschließenden Aufglühschritt, wird der Rotor 4 weichgeglüht, um Wärmespannungen im Rotor 4 abzubauen. Anschließend wird der Rotor 4 abermals auf etwa 750°C bis 850°C erwärmt, um anschließend die Martensitbildung in der Schicht 19 durch ein Ölabschrecken einzuleiten. Da die Schicht 19 einen über 0,6 % hohen Anteil an Kohlenstoff aufweist, wird der Rotor für etwa ein bis zwei Stunden auf etwa -80°C bis -100°C abgekühlt, um eine Restaustenitbildung in der Schicht 19 zu vermeiden. Um die Spröde des Rotors 4 zu reduzieren wird der Rotor 4 für etwa 2 Stunden bei ca. 180°C bis 220°C angelassen. Nach der Wärmebehandlung weist die Schicht 19 vorteilhafterweise überwiegend Martensit, sowie Ferrit und Carbide auf, wobei Carbide zusätzlich den elektrischen Widerstand erhöhen und deren Entstehung beim Anlassen durch den Zerfall von Restaustenit gefördert wird. Der Rotorkern 22 weist nach der Wärmebehandlung einen hohen Anteil an Ferrit auf, was der mechanischen Festigkeit und der magnetischen Flussführung dient. Dabei wird unter dem Rotorkern 22 der Rotor 4 ausgenommen der Schicht 19 verstanden.

Üblicherweise weisen rotationssymmetrische Teile nach einer Wärmebehandlung einen Verzug auf, der mittels Schleifen, elektrischem Erodieren und mittels Auswuchten ausgeglichen wird, so dass der Rotor 4 für die erhöhten Drehzahlbereiche der in Fig. 2 gezeigten elektrischen Maschine 30 geeignet ist.

Die Wärmebehandlung hat den Vorteil, dass die Umfangsflächen des Rotors 4 oberflächennah eine Schicht 19 aufweisen, deren spezifischer elektrischer Widerstand etwa 45 µΩm ist. Dabei erhöhen insbesondere der in der Schicht 19 vorhandene Martensit und die Carbide den spezifischen elektrischen Widerstand. Dadurch werden Wirbelströme, die zwischen den einzelnen Ausnehmungen 18 verlaufen gedämpft. Höhere spezifische elektrische Widerstände sind nur durch hochlegierte Stähle erreichbar, wobei hochlegierte Stähle zumeist schlechtere weichmagnetische Eigenschaften als der als Rotorwerkstoff verwendete Einsatzstahl 16MnCr5 aufweisen. Durch die Erhöhung des spezifischen elektrischen Widerstands der Schicht 19 können sowohl parallel zur Rotorachse 21 verlaufende Wirbelströme, als auch in Rotationsrichtung des Rotors 4 verlaufende Wirbelströme gedämpft werden.

Ein nicht exakt sinusförmiger Stromverlauf führt über die Wicklungen im Ständer zu Feldwellen im Luftspalt, die Oberschwingungen im Rotor erzeugen, die asynchron mit dem Rotor umlaufen. Die zusätzlich erzeugten Feldwellen führen zu Wirbelstromverlusten im Rotor 4. Insbesondere erzeugt eine blockförmige Bestromung der Wicklungen im Ständer Oberschwingungen der fünften und siebten Ordnung, die jeweils mit der sechsfachen Drehzahl entgegengesetzt der Richtung des Rotorumlaufs und mit der Rotorumlaufrichtung um die Rotorachse rotieren. Da die Feldwellen eine Wellenlänge der Polteilung aufweisen, werden Wirbelstromverluste im gesamten Rotor 4 erzeugt. Die Ausnehmungen 18 können den entstehenden Wirbelstrom nicht unterbrechen, da dieser parallel zu den Ausnehmungen verläuft. Jedoch reduziert die Schicht 19 durch einen erhöhten spezifischen elektrischen Widerstand die Wirbelstromverluste der Feldwellen.

## Patentansprüche

1. Elektrische Maschine (30), enthaltend einen Stator (1), einen Rotor (4), der einstückig aufgebaut und drehbar um eine Rotorachse (21) gelagert ist, mindestens eine Spule (3), die im Wesentlichen ein um die Rotorachse (21) rotierendes radiales Magnetfeld erzeugt, und einen Magneten (9), wobei der Rotor (4) über eine Wirbelstromreduktionseinrichtung (18; 19) verfügt, um Wirbelströme zu dämpfen, wobei die Wirbelstromreduktionseinrichtung (18; 19) oberflächennah am Rotor (4) an zumindest einer Umfangsfläche des Rotors (4) angeordnet ist, wobei die Wirbelstromreduktionseinrichtung (18; 19) radial verlaufende Strukturelemente (18) umfasst, die als Ausnehmungen (18) in zumindest einer Umfangsfläche des Rotors (4) ausgeführt sind, **dadurch gekennzeichnet, dass** der Rotor (4) an zumindest einer Umfangsfläche eine Schicht (19) umfasst, wobei die Schicht (19) einen höheren spezifischen elektrischen Widerstand als der Rotorwerkstoff aufweist.

2. Elektrische Maschine (30) nach Anspruch 1, **dadurch gekennzeichnet, dass** die Ausnehmungen (18) als Nuten ausgeführt sind.

3. Elektrische Maschine (30) nach einem der Ansprüche 1 bis 2, **dadurch gekennzeichnet dass**, der Rotor weichmagnetische Eigenschaften aufweist.

4. Elektrische Maschine (30) nach einem der Ansprüche 1 bis 3, **dadurch gekennzeichnet, dass** die Schicht (19) einen erhöhten Kohlenstoffgehalt gegenüber dem Rotorwerkstoff aufweist.

5. Elektrische Maschine nach einem der Ansprüche 1 bis 4, **dadurch gekennzeichnet, dass** die Schicht (19) überwiegend Martensit aufweist.

6. Elektrische Maschine nach einem der Ansprüche 1 bis 5, **dadurch gekennzeichnet, dass** der Rotorkern (22) überwiegend Ferrit aufweist.

## Claims

1. Electrical machine (30) comprising a stator (1), a rotor (4) which is of integral construction and is mounted such that it can rotate about a motor axis (21), at least one coil (3) which substantially generates a radial magnetic field which rotates about the rotor axis (21), and a magnet (9), wherein the rotor (4) has an eddy current reduction device (18; 19) in order to damp eddy currents, wherein the eddy current reduction device (18; 19) is arranged close to the surface on the rotor (4) on at least a circumferential surface of the rotor (4), wherein the eddy current reduction device (18; 19) comprises radially running structural elements (18) which are designed as recesses (18) in at least one circumferential surface of the rotor (4), **characterized in that** the rotor (4) comprises a layer (19) on at least one circumferential surface, wherein the layer (19) has a higher specific electrical resistance than the rotor material.

2. Electrical machine (30) according to Claim 1, **characterized in that** the recesses (18) are designed as slots.

3. Electrical machine (30) according to either of Claims 1 and 2, **characterized in that** the rotor has soft-magnetic properties.

4. Electrical machine (30) according to one of Claims 1 to 3, **characterized in that** the layer (19) has an elevated carbon content in relation to the rotor material.

5. Electrical machine according to one of Claims 1 to 4, **characterized in that** the layer (19) predominantly comprises martensite.

6. Electrical machine according to one of Claims 1 to 5, **characterized in that** the rotor core (22) predominantly comprises ferrite.

## Revendications

1. Machine électrique (30), comprenant un stator (1), un rotor (4) qui est construit d'une seule pièce et est monté de manière à pouvoir tourner autour d'un axe de rotor (21), au moins une bobine (3) qui génère essentiellement un champ magnétique radial tournant autour de l'axe de rotor (21), et un aimant (9), le rotor (4) disposant d'un dispositif de réduction des courants de Foucault (18 ; 19), afin d'amortir les courants de Foucault, le dispositif de réduction des courants de Foucault (18 ; 19) étant disposé sur le rotor (4) à proximité de la surface au niveau d'au moins une surface périphérique du rotor (4), le dispositif de réduction des courants de Foucault (18 ; 19) comprenant des éléments structurels (18) s'étendant radialement qui sont réalisés sous forme d'évidements (18) dans au moins une surface périphérique du rotor (4), **caractérisée en ce que** le rotor (4) comprend, au niveau d'au moins une surface périphérique, une couche (19) qui présente une résistance électrique spécifique supérieure à celle du matériau du rotor.

2. Machine électrique (30) selon la revendication 1, **caractérisée en ce que** les évidements (18) sont réalisés sous forme de rainures.

3. Machine électrique (30) selon l'une quelconque des revendications 1 et 2, **caractérisée en ce que** le rotor présente des propriétés magnétiques douces.

4. Machine électrique (30) selon l'une quelconque des revendications 1 à 3, **caractérisée en ce que** la couche (19) présente une teneur en carbone supérieure à celle du matériau du rotor.

5. Machine électrique selon l'une quelconque des revendications 1 à 4, **caractérisée en ce que** la couche (19) présente essentiellement de la martensite.

6. Machine électrique selon l'une quelconque des revendications 1 à 5, **caractérisée en ce que** le noyau de rotor (22) présente essentiellement de la ferrite.
